# EUROPÄISCHE PATENTSCHRIFT

(11) **EP 3 385 085 B1**
(45) Veröffentlichungstag und Bekanntmachung des Hinweises auf die Patenterteilung: **09.12.2020**
(21) Anmeldenummer: 18163289.4
(22) Anmeldetag: 22.03.2018
(51) Int. Cl.: B60B 15/28, B62D 49/06

(54) **RADZUSATZGEWICHT FÜR EIN LANDWIRTSCHAFTLICHES NUTZFAHRZEUG**
ADDITIONAL WHEEL WEIGHT FOR AGRICULTURAL VEHICLE
MASSE D'ALOURDISSEMENT DE ROUE POUR UN VÉHICULE UTILITAIRE AGRICOLE

(30) Priorität: 30.03.2017 DE 102017205465
(43) Veröffentlichungstag der Anmeldung: 10.10.2018
(73) Patentinhaber: Deere & Company, Moline, IL 61265 (US)
(72) Erfinder: Letscher, Jens, 68163 Mannheim (DE); Suttrup, Jana, 68163 Mannheim (DE)
(74) Vertreter: Dehnhardt, Florian Christopher

(56) Entgegenhaltungen:
- DE-A1-102014 202 074
- DE-B- 1 279 496
- US-A- 4 400 038
- US-A- 5 873 636
- US-A1- 2005 280 308
- US-A1- 2013 342 002

## Beschreibung

Die Erfindung betrifft ein Radzusatzgewicht für ein landwirtschaftliches Nutzfahrzeug, mit einer Gewichtsscheibe und einer an einer Radfelge anbringbaren Halterung zur Befestigung der Gewichtsscheibe.

Ein derartiges Radzusatzgewicht zur Ballastierung einer Antriebsachse eines landwirtschaftlichen Traktors ist beispielsweise aus der US2005/280308A1 oder aus der DE 10 2014 202 074 A1 bekannt. Das Radzusatzgewicht umfasst eine an einer Radfelge mittels eines Schraubkranzes befestigbare Adapterplatte sowie eine an der Adapterplatte anbringbare Gewichtsscheibe. Um die korrekte Positionierung der Gewichtsscheibe zu vereinfachen, sind mehrere ineinandergreifende konische Anlageflächen bzw. Codierungsausformungen und Distanzdome vorgesehen. Die endgültige Montage erfolgt hierbei mittels herkömmlicher Schraubbolzen.

Es ist Aufgabe der vorliegenden Erfindung, ein Radzusatzgewicht der eingangs genannten Art hinsichtlich seiner Handhabung während der Montage weiter zu verbessern.

Diese Aufgabe wird durch ein Radzusatzgewicht für ein landwirtschaftliches Nutzfahrzeug mit den Merkmalen des Patentanspruchs 1 gelöst.

Das Radzusatzgewicht für ein landwirtschaftliches Nutzfahrzeug weist eine Gewichtsscheibe und eine an einer Radfelge anbringbare Halterung zur Befestigung der Gewichtsscheibe auf. Die Gewichtsscheibe umfasst einen von Hand und/oder durch Fremdkraft betätigbaren Verschlussmechanismus, der eine axial verlaufende Führungsöffnung zur Aufnahme eines der Halterung zugeordneten Kupplungselements sowie ein lösbares Verriegelungselement zur Arretierung des Kupplungselements innerhalb der Führungsöffnung aufweist. Eine Fremdkraftbetätigung des Verschlussmechanismus kann hierbei mittels eines elektromotorischen Antriebs oder dergleichen erfolgen.

Da sich die meist mehrere 100 kg schwere Gewichtsscheibe beim Montieren bzw. Aufschieben an dem innerhalb der Führungsöffnung axial geführten Kupplungselement abstützen kann und darin mittels des Verriegelungselements zugleich arretierbar ist, ist eine besonders sichere und komfortable Anbringung des Radzusatzgewichts möglich. Im Falle eines als landwirtschaftlicher Traktor ausgebildeten landwirtschaftlichen Nutzfahrzeugs können entsprechende Radzusatzgewichte sowohl an den Vorder- als auch Hinterrädern, im Falle einer Erntemaschine oder eines Feldhäckslers ausschließlich an den Hinterrädern vorgesehen sein, wobei einer Anbringung an den Vorderrädern ebenfalls nichts entgegensteht.

Unter der axialen Ausrichtung der Führungsöffnung ist hierbei diejenige Richtung zu verstehen, die mit dem jeweiligen Achsverlauf der mit dem Radzusatzgewicht auszustattenden bzw. ausgestatteten Radfelge korrespondiert.

Weitere vorteilhafte Weiterbildungen des erfindungsgemäßen Radzusatzgewichts gehen aus den Unteransprüchen hervor.

Bevorzugt weist das Verriegelungselement zur Arretierung des Kupplungselements in einer Verriegelungsposition eine in die Führungsöffnung hineinragende Sperrkontur auf. Idealerweise bildet die Sperrkontur eine Anlagefläche für das in der Führungsöffnung befindliche Kupplungselement, wobei die Anlagefläche das Kupplungselement in Ausbaurichtung zumindest teilweise umgreift bzw. hintergreift, wenn sich das Verriegelungselement in der Verriegelungsposition befindet. Bei dem Kupplungselement handelt es sich beispielsweise um eine Kupplungskugel, wobei die Sperrkontur einen mit der Kugeloberfläche korrespondierenden sphärischen Verlauf aufweist. Denkbar sind jedoch auch andere Sperrkonturen, die sich zum Arretieren eines von dem Kupplungselement umfassten pilzförmigen Kupplungskopfs oder dergleichen eignen.

Gemäß einer ersten Ausführungsform des Radzusatzgewichts kann die Sperrkontur an einem verschiebbaren Verriegelungsbolzen bzw. einer Sperrklinke ausgebildet sein, wobei der Verriegelungsbolzen bzw. die Sperrklinke unter der Wirkung einer Rückstellfeder in die Verriegelungsposition gedrängt wird. Hierdurch ist ein selbstsichernder Verschlussmechanismus gebildet, der ein unerwünschtes Lösen aufgrund fahrtbedingter Vibrationen oder dergleichen verlässlich ausschließt.

Insbesondere kann vorgesehen sein, dass sich der Verriegelungsbolzen bzw. die Sperrklinke entgegen der Wirkung der Rückstellfeder mittels eines Betätigungshebels in eine das Kupplungselement freigebende Entriegelungsposition verbringen lässt. Die Federkonstante der Rückstellfeder ist derart bemessen bzw. gewählt, dass neben der Aufrechterhaltung einer verlässlichen Sicherungswirkung ein problemloses, nämlich werkzeugloses Verschwenken des Betätigungshebels von Hand möglich ist.

Darüber hinaus besteht die Möglichkeit, dass der Verriegelungsbolzen bzw. die Sperrklinke gemeinsam mit der Rückstellfeder einen mittels des Betätigungshebels lösbaren Schnappverschluss zur selbsttätigen Arretierung des Kupplungselements bilden. In diesem Fall wird der Verriegelungsbolzen bzw. die Sperrklinke beim Aufschieben der Gewichtsscheibe seitens des Kupplungselements unter Freigabe der Führungsöffnung solange mitverschoben bzw. weggeschoben, bis diese ihre Endlage innerhalb der Führungsöffnung einnimmt und der Verriegelungsbolzen bzw. die Sperrklinke von selbst in die Verriegelungsposition zurückzukehren vermag, um das Kupplungselement zu sichern. Der Schnappverschluss stellt einen zusätzlichen Komfortgewinn für den Bediener dar, da zur Montage der Gewichtsscheibe keine zusätzlichen Handgriffe erforderlich sind, die Gewichtsscheibe insbesondere nicht in unmontiertem Zustand losgelassen werden muss, um separate Sicherungselemente wie Schraubbolzen oder dergleichen anzubringen.

Gemäß einer zweiten Ausführungsform des Radzusatzgewichts kann die Sperrkontur an einem schwenkbar gelagerten Betätigungshebel ausgeformt sein. Insbesondere kann in diesem Fall das Kupplungselement als Kupplungskugel ausgebildet sein, wobei die Sperrkontur einen sphärischen Verlauf aufweist, der um eine mit dem Mittelpunkt der in der Führungsöffnung befindlichen Kupplungskugel fluchtende Schwenkachse orientiert ist.

Dabei besteht die Möglichkeit, dass die sphärische Sperrkontur bezüglich der Schwenkachse des Betätigungshebels derart exzentrisch verläuft, dass die Kupplungskugel in der Verriegelungsposition innerhalb der Führungsöffnung verspannt ist, sodass sich ein toleranzbedingtes Spiel zwischen Kupplungskugel und Führungsöffnung ausgleichen lässt.

Zusätzlich oder alternativ kann ein Sicherungselement zur lösbaren Fixierung des Betätigungshebels in der Verriegelungsposition vorhanden sein. Das Sicherungselement kann eine an der Gewichtsscheibe ausgebildete Sicherungsnase aufweisen, die sich durch eine in dem Betätigungshebel ausgebildete Öffnung für den Fall hindurcherstreckt, dass sich dieser in seiner Verriegelungsposition befindet. Zur Sicherung des Betätigungshebels ist durch die Sicherungsnase ein Splint derart hindurchsteckbar, dass ein Verschwenken aus der Verriegelungsposition blockiert wird.

Um ein ungewolltes Lösen des Verriegelungsmechanismus zu erschweren, ist es denkbar, dass der Betätigungshebel in der Verriegelungsposition im Wesentlichen flächenbündig in einer von der Gewichtsscheibe umfassten Ausnehmung aufgenommen ist, wobei sich der Betätigungshebel zur Freigabe der Kupplungskugel von Hand aus der Ausnehmung herausklappen lässt, ein unbeabsichtigtes Herausklappen aufgrund vorbeistreifenden Gestrüpps oder dergleichen hingegen weitgehend ausgeschlossen ist.

Des Weiteren ist es möglich, dass ein Spannelement zur Herstellung eines Kraftschlusses zwischen der Halterung und der Gewichtsscheibe vorgesehen ist. Das Spannelement kann in Gestalt einer zwischen der Halterung und der Gewichtsscheibe angeordneten Tellerfeder ausgebildet sein. Die Tellerfeder ist beispielsweise auf eine an der Kupplungskugel ausgebildete Befestigungsbasis aufgesteckt. Beim Aufschieben der Gewichtsscheibe wird die Tellerfeder gegenüber der Halterung komprimiert, sodass unerwünschte fahrtbedingte Bewegungen zwischen Gewichtsscheibe und Halterung gedämpft werden.

Bevorzugt weist die Gewichtsscheibe mehrere Verschlussmechanismen in radial gegenüberliegenden Positionen auf, sodass eine sichere Befestigung der Gewichtsscheibe an der Halterung gewährleistet ist. Hierbei ist es von Vorteil, wenn genau zwei Verschlussmechanismen vorgesehen sind, da in diesem Fall eine einzelne Person in der Lage ist, diese mit beiden Händen gleichzeitig zu bedienen bzw. zu betätigen.

Um den Verschlussmechanismus von fahrtbedingt an der Gewichtsscheibe angreifenden Torsionskräften zu entlasten, kann die Halterung zudem mehrere, in entsprechende Aufnahmeöffnungen formschlüssig eingreifende Vorsprünge oder dergleichen aufweisen. Derartige Torsionskräfte treten insbesondere beim Bremsen oder Beschleunigen bedingt durch sich ändernde Raddrehzahlen des landwirtschaftlichen Nutzfahrzeugs auf.

Es ist vorstellbar, dass die Halterung einen hohlzylindrischen Grundkörper sowie einen umlaufenden Befestigungsflansch zur Anbringung an einer Radfelge aufweist. Der hohlzylindrische Grundkörper kann in an der Radfelge montiertem Zustand zugleich dem mechanischen Schutz eines Radendantriebgehäuses dienen. Ein derartiges Radendantriebgehäuse mit einem darin beherbergten Untersetzungsgetriebe ist bei allradgetriebenen landwirtschaftlichen Traktoren an den Vorderrädern vorgesehen. Der Befestigungsflansch kann hierbei als Schraubkranz zur Befestigung an einem Gegenflansch der Radfelge ausgebildet sein.

Ferner kann die Gewichtsscheibe eine zentrale Ausnehmung zur formschlüssigen Aufnahme der Halterung, insbesondere eines von dieser umfassten hohlzylindrischen Grundkörpers aufweisen. In diesem Fall vermag sich das gesamte Gewicht der Gewichtsscheibe radial an der Halterung abzustützen, sodass dem Auftreten von am Verschlussmechanismus wirkenden unerwünschten Scherkräften vorgebeugt wird.

Hierbei können an der Halterung entlang des hohlzylindrischen Grundkörpers axial verlaufende Gleitrippen ausgebildet sein. Dies führt zu einer entsprechenden Verringerung der Kontaktfläche und damit der Reibung zwischen Gewichtsscheibe und Halterung, sodass sich diese beim Montieren gegenüber der Halterung leichter positionieren lässt.

Ist eine zusätzliche Erhöhung des Gewichts gewünscht, so ist es möglich, dass die Gewichtsscheibe ihrerseits ein Kupplungselement zur Anbringung einer weiteren Gewichtsscheibe aufweist.

Auch können an der Gewichtsscheibe im Sinne einer leichteren Handhabung Ausnehmungen zur Aufnahme einer Ladergabel oder eines Seilzugs ausgebildet sein. Hierbei wird die Gewichtsscheibe beispielsweise mittels eines an einem landwirtschaftlichen Traktor vorgesehenen Frontladers oder eines Flaschenzugs soweit angehoben, bis die in der Gewichtsscheibe vorgesehene zentrale Ausnehmung mit der Halterung fluchtet und so ein problemloses Aufschieben zulässt.

Das erfindungsgemäße Radzusatzgewicht wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein in Explosionsdarstellung wiedergegebenes erstes Ausführungsbeispiel des erfindungsgemäßen Radzusatzgewichts, umfassend eine einzelne Gewichtsscheibe und eine an einer Radfelge anbringbare Halterung,
- Fig. 2: eine Querschnittsdarstellung des in Fig. 1 gezeigten Radzusatzgewichts während der Montage,
- Fig. 3: eine Querschnittsdarstellung des in Fig. 1 gezeigten Radzusatzgewichts in montiertem Zustand,
- Fig. 4: eine perspektivische Ansicht des in Fig. 3 gezeigten Radzusatzgewichts bei abgenommener Gewichtsscheibe,
- Fig. 5: das in Fig. 1 gezeigte Radzusatzgewicht im Falle der Montage mehrerer Gewichtsscheiben unter Zuhilfenahme einer Ladergabel,
- Fig. 6: ein in Explosionsdarstellung wiedergegebenes zweites Ausführungsbeispiel des erfindungsgemäßen Radzusatzgewichts, umfassend eine einzelne Gewichtsscheibe und eine an einer Radfelge anbringbare Halterung,
- Fig. 7: eine Querschnittsdarstellung des in Fig. 6 gezeigten Radzusatzgewichts während der Montage,
- Fig. 8: eine Querschnittsdarstellung des in Fig. 6 gezeigten Radzusatzgewichts in montiertem Zustand,
- Fig. 9: eine Querschnittsdarstellung eines von dem Radzusatzgewicht gemäß Fig. 6 umfassten Verschlussmechanismus in einer Entriegelungsposition, und
- Fig. 10: eine Querschnittsdarstellung eines von dem Radzusatzgewicht gemäß Fig. 6 umfassten Verschlussmechanismus in einer Verriegelungsposition.

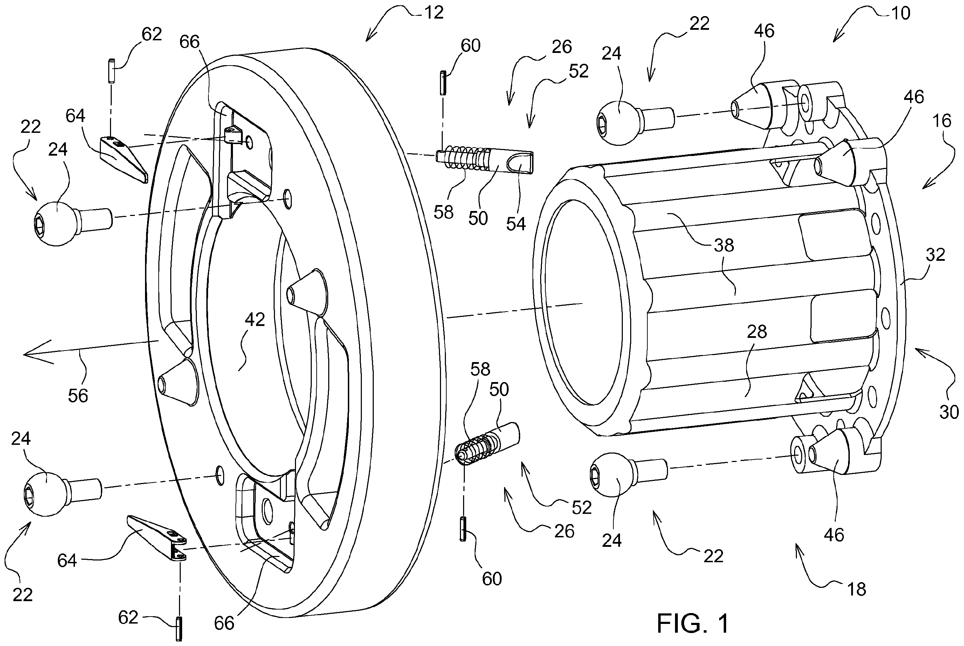

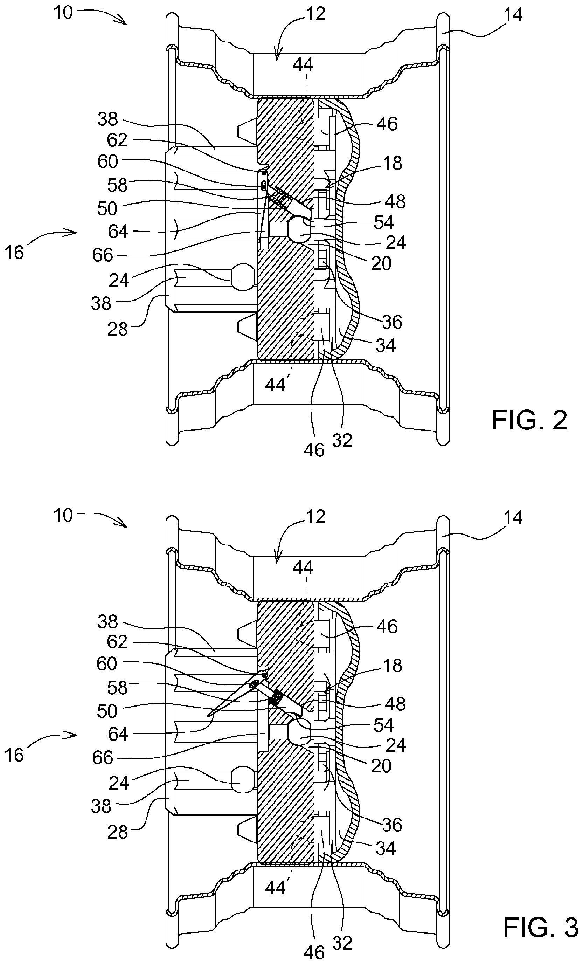

Fig. 1 zeigt ein in Explosionsdarstellung wiedergegebenes erstes Ausführungsbeispiel des erfindungsgemäßen Radzusatzgewichts für ein landwirtschaftliches Nutzfahrzeug, wobei das erfindungsgemäße Radzusatzgewicht nachfolgend unter Bezugnahme auf die beiden Querschnittsdarstellungen in Fig. 2 bzw. 3 beschrieben wird.

Das Radzusatzgewicht 10 weist eine Gewichtsscheibe 12 und eine an einer Radfelge 14 anbringbare Halterung 16 zur Befestigung der Gewichtsscheibe 12 auf. Die Gewichtsscheibe 12 umfasst einen von Hand betätigbaren ersten und zweiten Verschlussmechanismus 18, der jeweils eine axial verlaufende Führungsöffnung 20 zur Aufnahme eines der Halterung zugeordneten Kupplungselements 22 in Gestalt einer austauschbaren Kupplungskugel 24 sowie ein lösbares Verriegelungselement 26 zur Arretierung der Kupplungskugel 24 innerhalb der Führungsöffnung 20 aufweist. Hierbei ist der erste und zweite Verschlussmechanismus 18 in radial gegenüber liegenden Positionen der Gewichtsscheibe 12 angeordnet.

Die Ausgestaltung der Führungsöffnung 20 ist in Fig. 2 bzw. 3 wiedergegeben, wobei diese sich einwärts konisch verjüngt, um das Zentrieren der Kupplungskugel 24 gegenüber der Führungsöffnung 20 beim Montieren der Gewichtsscheibe 12 an der Halterung 16 zu vereinfachen.

Die Halterung 16 weist einen hohlzylindrischen Grundköper 28 sowie einen umlaufenden Befestigungsflansch 30 zur Anbringung an der Radfelge 14 auf, wobei der Befestigungsflansch 30 als Schraubkranz 32 zur Befestigung an einem Gegenflansch 34 der Radfelge 14 ausgebildet ist. Die Befestigung erfolgt hierbei mittels zugehöriger Schraubbolzen 36.

Zusätzlich sind an der Halterung 16 entlang des hohlzylindrischen Grundkörpers 28 axial verlaufende Gleitrippen 38 ausgebildet.

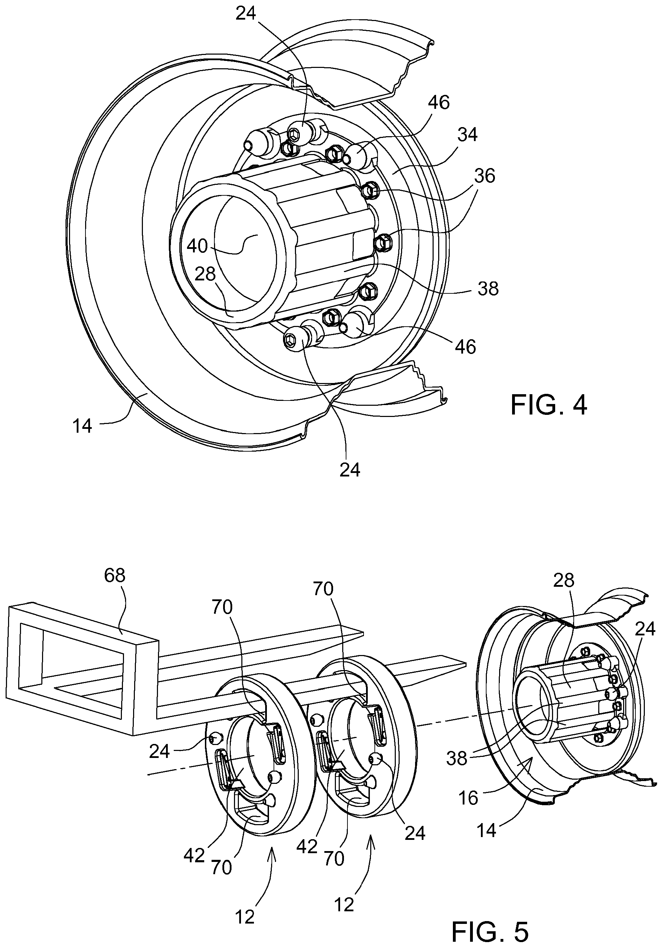

Beispielsgemäß dient der hohlzylindrische Grundkörper 28 in an der Radfelge 14 montiertem Zustand zugleich dem mechanischen Schutz eines in Fig. 4 veranschaulichten Radendantriebgehäuses 40. Das Radendantriebgehäuse 40 beherbergt ein Untersetzungsgetriebe, wie es bei allradgetriebenen landwirtschaftlichen Traktoren an den Vorderrädern vorgesehen ist. Hierbei sei der Vollständigkeit halber angemerkt, dass eine Verwendung des Radzusatzgewichts 10 nicht auf landwirtschaftliche Traktoren beschränkt ist, sondern auch bei beliebigen anderen landwirtschaftlichen Nutzfahrzeugen, wie Erntemaschinen oder Feldhäckslern eingesetzt werden kann.

Weiterhin weist die Gewichtsscheibe 12 eine zentrale Ausnehmung 42 zur formschlüssigen Aufnahme der Halterung 16, genauer gesagt des von dieser umfassten hohlzylindrischen Grundkörpers 28 auf.

Die Montage des Radzusatzgewichts 10 erfolgt durch axiales Aufschieben der Gewichtsscheibe 12 auf die Halterung 16 bzw. des von dieser umfassten hohlzylindrischen Grundkörpers 28. Hierbei werden die Führungsöffnungen 20 durch Drehen der Gewichtsscheibe 12 derart fluchtend gegenüber den Kupplungskugeln 24 der Halterung 16 positioniert, dass sich diese durch weiteres Aufschieben miteinander in Eingriff bringen sowie mittels des Verriegelungsmechanismus 18 arretieren lassen.

Zur Entlastung des Verschlussmechanismus 18 von an der Gewichtsscheibe 12 fahrtbedingt angreifenden Torsionskräften weist die Halterung 16 mehrere, in entsprechende Aufnahmeöffnungen 44 formschlüssig eingreifende Vorsprünge 46 auf. Derartige Torsionskräfte treten insbesondere beim Bremsen oder Beschleunigen bedingt durch sich ändernde Raddrehzahlen des landwirtschaftlichen Nutzfahrzeugs auf.

Im vorliegenden Fall handelt es sich bei dem Verriegelungselement 26 um einen innerhalb einer Bohrung 48 verschiebbaren Verriegelungsbolzen 50, wobei an dem Verriegelungsbolzen 50 in einem der Führungsöffnung 20 zugewandten Endbereich 52 eine Sperrkontur 54 ausgebildet ist, die einen mit der Kugeloberfläche korrespondierenden sphärischen Verlauf aufweist.

Wie sich Fig. 3 entnehmen lässt, bildet die sphärisch verlaufende Sperrkontur 54 eine Anlagefläche für die in der Führungsöffnung 20 befindliche Kupplungskugel 24, wobei die Anlagefläche die Kupplungskugel 24 in Ausbaurichtung 56 zumindest teilweise umgreift bzw. hintergreift, sofern sich der Verriegelungsbolzen 50 in der in Fig. 3 dargestellten Verriegelungsposition befindet.

Hierbei ist vorgesehen, dass sich der Verriegelungsbolzen 50 entgegen der Wirkung einer Rückstellfeder 58 mittels eines über zugehörige Befestigungsstifte 60, 62 angelenkten Betätigungshebels 64 aus der Verriegelungsposition in eine die Kupplungskugel 24 freigebende Entriegelungsposition verbringen lässt. Letztere ist in Fig. 2 dargestellt. Die Federkonstante der Rückstellfeder 58 ist derart bemessen bzw. gewählt, dass neben der Aufrechterhaltung einer verlässlichen Sicherungswirkung ein problemloses, nämlich werkzeugloses Verschwenken des Betätigungshebels 64 von Hand möglich ist.

Um ein ungewolltes Lösen des Verriegelungsmechanismus 18 zu erschweren, ist der Betätigungshebel 64 in der Verriegelungsposition im Wesentlichen flächenbündig in einer von der Gewichtsscheibe 12 umfassten Ausnehmung 66 aufgenommen, wobei sich der Betätigungshebel 64 zur Freigabe der Kupplungskugel 24 von Hand aus der Ausnehmung 66 herausklappen lässt.

Der Verriegelungsbolzen 50 bildet jeweils gemeinsam mit der Rückstellfeder 58 einen mittels des Betätigungshebels 64 lösbaren Schnappverschluss zur selbsttätigten Arretierung der Kupplungskugel 24. In diesem Fall wird der Verriegelungsbolzen 50 beim Aufschieben der Gewichtsscheibe 12 seitens der Kupplungskugel 24 unter Freigabe der Führungsöffnung 20 solange mitverschoben bzw. weggeschoben, bis diese ihre in Fig. 2 wiedergegebene Endlage innerhalb der Führungsöffnung 20 einnimmt und der Verriegelungsbolzen 50 von selbst in die Verriegelungsposition gemäß Fig. 3 zurückzukehren vermag, um die Kupplungskugel 24 zu sichern.

In Fig. 5 ist das Radzusatzgewicht 10 bei der Montage mehrerer Gewichtsscheiben 12 unter Zuhilfenahme einer Ladergabel 68 gezeigt, wozu die Gewichtsscheiben 12 ihrerseits Kupplungskugeln 24 zur Anbringung weiterer Gewichtsscheiben aufweisen.

An den beiden Gewichtsscheiben 12 sind Ausnehmungen 70 zur Aufnahme der Ladergabel 68 oder eines nicht dargestellten Seilzugs ausgebildet. Die Ladergabel 68 ist Bestandteil eines Frontladers eines landwirtschaftlichen Traktors (nicht gezeigt). Hierbei werden die Gewichtsscheiben 12 soweit angehoben, bis die in den Gewichtsscheiben 12 vorgesehenen zentralen Ausnehmungen 42 mit der Halterung 16 fluchten und so ein problemloses Aufschieben zulassen.

Die Demontage der Gewichtsscheiben 12 erfolgt in umgekehrter Reihenfolge und kann ebenfalls unter Zuhilfenahme eines Frontladers nach Lösen des jeweils zugehörigen Verriegelungsmechanismus 18 durchgeführt werden.

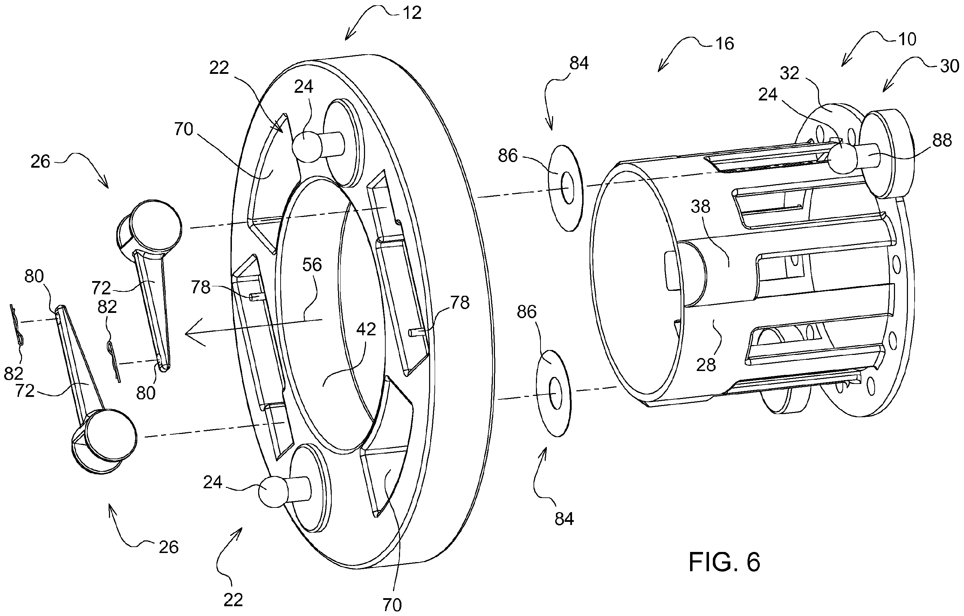

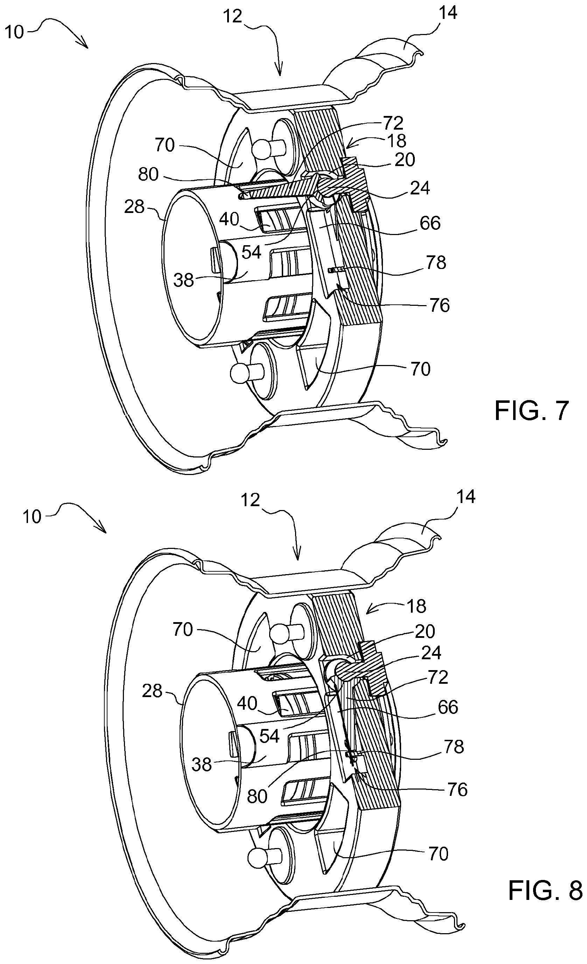

Fig. 6 zeigt ein in Explosionsdarstellung wiedergegebenes zweites Ausführungsbeispiel des erfindungsgemäßen Radzusatzgewichts für ein landwirtschaftliches Nutzfahrzeug, wobei das erfindungsgemäße Radzusatzgewicht nachfolgend unter Bezugnahme auf die beiden Querschnittsdarstellungen in Fig. 7 bzw. 8 beschrieben wird.

Das zweite Ausführungsbeispiel unterscheidet sich von dem ersten Ausführungsbeispiel hinsichtlich der Ausgestaltung des Verschlussmechanismus 18. Bei dem insofern vorgesehenen Verriegelungselement 26 ist die sphärisch verlaufende Sperrkontur 54 unmittelbar an einem schwenkbar gelagerten Betätigungshebel 72 ausgeformt. Die Sperrkontur 54 ist um eine mit dem Mittelpunkt der in der Führungsöffnung 20 befindlichen Kupplungskugel 24 fluchtende Schwenkachse 74 orientiert, was der Fall ist, wenn sich die Kupplungskugel 24 in der in Fig. 7 bzw. 8 dargestellten Endlage befindet.

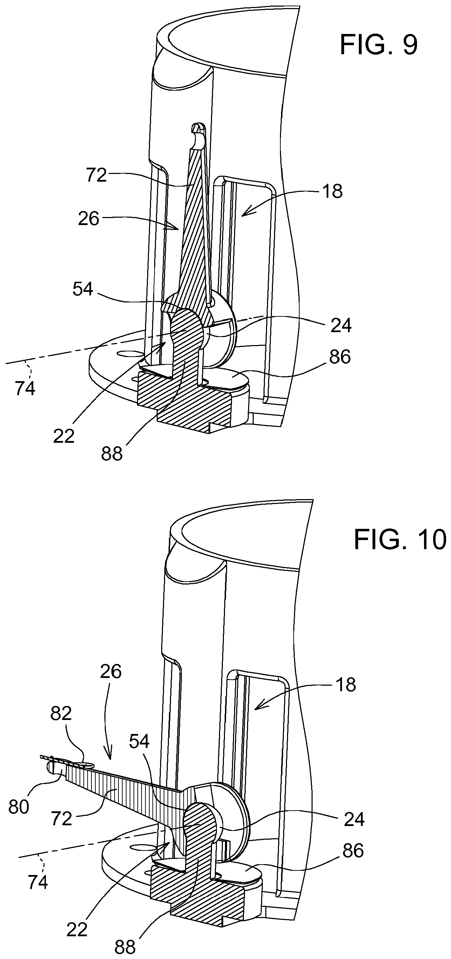

Hierbei sind aus Fig. 9 und 10 weitere im Querschnitt dargestellte Details hinsichtlich des Zusammenwirkens zwischen dem Betätigungshebel 72 bzw. der daran ausgebildeten Sperrkontur 54 einerseits und der Kupplungskugel 24 andererseits ersichtlich. Demgemäß folgt die Sperrkontur 54 dem sphärischen Verlauf der Kugeloberfläche und lässt sich entlang dieser um 90 Grad zwischen einer Entriegelungsposition gemäß Fig. 9 und einer Verriegelungsposition gemäß Fig. 10 hin- und herschwenken. Auch hier bildet die sphärisch verlaufende Sperrkontur 54 eine Anlagefläche für die in der Führungsöffnung 20 befindliche Kupplungskugel 24, wobei die Anlagefläche die Kupplungskugel 24 in Ausbaurichtung 56 zumindest teilweise umgreift bzw. hintergreift, sofern sich der Betätigungshebel 72 in der in Fig. 10 dargestellten Verriegelungsposition befindet.

Optional verläuft die sphärische Sperrkontur 54 bezüglich der Schwenkachse 74 des Betätigungshebels 72 derart exzentrisch, dass die Kupplungskugel 24 in der in Fig. 8 bzw. 10 wiedergegebenen Verriegelungsposition innerhalb der Führungsöffnung 20 verspannbar ist.

Daneben ist ein Sicherungselement 76 zur lösbaren Fixierung des Betätigungshebels 72 in der Verriegelungsposition vorhanden. Das Sicherungselement 76 weist eine an der Gewichtsscheibe 12 ausgebildete Sicherungsnase 78 auf, die sich durch eine in dem Betätigungshebel 72 ausgebildete Öffnung 80 für den Fall hindurcherstreckt, dass sich dieser in seiner Verriegelungsposition gemäß Fig. 8 bzw. 10 befindet. Zur Sicherung des Betätigungshebels 72 ist durch die Sicherungsnase 78 ein Splint 82 derart hindurchsteckbar, dass ein Verschwenken aus der Verriegelungsposition blockiert wird.

Ein Spannelement 84 dient der Herstellung eines Kraftschlusses zwischen der Halterung 16 und der Gewichtsscheibe 12. Das Spannelement 84 ist in Gestalt einer zwischen der Halterung 16 und der Gewichtsscheibe 12 angeordneten Tellerfeder 86 ausgebildet. Die Tellerfeder 86 ist im vorliegenden Fall auf eine an der Kupplungskugel 24 ausgebildete Befestigungsbasis 88 aufgesteckt. Beim Aufschieben der Gewichtsscheibe 12 wird die Tellerfeder 86 gegenüber der Halterung 16 komprimiert, sodass unerwünschte fahrtbedingte Bewegungen zwischen Gewichtsscheibe 12 und Halterung 16 gedämpft werden.

Bezüglich der Montage bzw. Demontage des Radzusatzgewichts 10 sei ergänzend auf die in Fig. 5 dargestellte Vorgehensweise verwiesen. Die Bedienung des Verschlussmechanismus 18 erfolgt prinzipiell wie im Falle des ersten Ausführungsbeispiels.

## Patentansprüche

1. Radzusatzgewicht für ein landwirtschaftliches Nutzfahrzeug, mit einer Gewichtsscheibe (12) und einer an einer Radfelge (14) anbringbaren Halterung (16) zur Befestigung der Gewichtsscheibe (12), wobei die Gewichtsscheibe (12) einen von Hand und/oder durch Fremdkraft betätigbaren Verschlussmechanismus (18) umfasst, der eine axial verlaufende Führungsöffnung (20) zur Aufnahme eines der Halterung (16) zugeordneten Kupplungselements (22) sowie ein lösbares Verriegelungselement (26) zur Arretierung des Kupplungselements (22) innerhalb der Führungsöffnung (20) aufweist.

2. Radzusatzgewicht nach Anspruch 1, **dadurch gekennzeichnet, dass** das Verriegelungselement (26) zur Arretierung des Kupplungselements (22) in einer Verriegelungsposition eine in die Führungsöffnung (20) hineinragende Sperrkontur (54) aufweist.

3. Radzusatzgewicht nach Anspruch 2, **dadurch gekennzeichnet, dass** die Sperrkontur (54) an einem verschiebbaren Verriegelungsbolzen (50) bzw. einer Sperrklinke ausgebildet ist, wobei der Verriegelungsbolzen (50) bzw. die Sperrklinke unter der Wirkung einer Rückstellfeder (58) in die Verriegelungsposition gedrängt wird.

4. Radzusatzgewicht nach Anspruch 3, **dadurch gekennzeichnet, dass** sich der Verriegelungsbolzen (50) bzw. die Sperrklinke entgegen der Wirkung der Rückstellfeder (58) mittels eines Betätigungshebels (64) in eine das Kupplungselement (22) freigebende Entriegelungsposition verbringen lässt.

5. Radzusatzgewicht nach Anspruch 3 oder 4, **dadurch gekennzeichnet, dass** der Verriegelungsbolzen (50) bzw. die Sperrklinke gemeinsam mit der Rückstellfeder (58) einen mittels des Betätigungshebels (64) lösbaren Schnappverschluss zur selbsttätigen Arretierung des Kupplungselements (22) bilden.

6. Radzusatzgewicht nach Anspruch 2, **dadurch gekennzeichnet, dass** die Sperrkontur (54) an einem schwenkbar gelagerten Betätigungshebel (72) ausgeformt ist.

7. Radzusatzgewicht nach Anspruch 6, **dadurch gekennzeichnet, dass** das Kupplungselement (22) als Kupplungskugel (24) ausgebildet ist, wobei die Sperrkontur (54) einen sphärischen Verlauf aufweist, der um eine mit dem Mittelpunkt der in der Führungsöffnung (20) befindlichen Kupplungskugel (24) fluchtende Schwenkachse (74) orientiert ist.

8. Radzusatzgewicht nach Anspruch 7, **dadurch gekennzeichnet, dass** die sphärische Sperrkontur (54) bezüglich der Schwenkachse (74) des Betätigungshebels (72) derart exzentrisch verläuft, dass die Kupplungskugel (24) in der Verriegelungsposition innerhalb der Führungsöffnung (20) verspannt ist.

9. Radzusatzgewicht nach Anspruch 4 oder 6, **dadurch gekennzeichnet, dass** ein Sicherungselement (76) zur lösbaren Fixierung des Betätigungshebels (64; 72) in der Verriegelungsposition vorhanden ist.

10. Radzusatzgewicht nach Anspruch 4 oder 6, **dadurch gekennzeichnet, dass** der Betätigungshebel (64; 72) in der Verriegelungsposition im Wesentlichen flächenbündig in einer von der Gewichtsscheibe (12) umfassten Ausnehmung (66) aufgenommen ist.

11. Radzusatzgewicht nach wenigstens einem der Ansprüche 1 bis 10, **dadurch gekennzeichnet, dass** ein Spannelement (84) zur Herstellung eines Kraftschlusses zwischen der Halterung (16) und der Gewichtsscheibe (12) vorgesehen ist.

12. Radzusatzgewicht nach wenigstens einem der Ansprüche 1 bis 11, **dadurch gekennzeichnet, dass** die Gewichtsscheibe (12) mehrere Verschlussmechanismen (18) in radial gegenüberliegenden Positionen aufweist.

13. Radzusatzgewicht nach wenigstens einem der Ansprüche 1 bis 12, **dadurch gekennzeichnet, dass** die Halterung (12) einen hohlzylindrischen Grundkörper (28) sowie einen umlaufenden Befestigungsflansch (30) zur Anbringung an einer Radfelge (14) aufweist.

14. Radzusatzgewicht nach wenigstens einem der Ansprüche 1 bis 13, **dadurch gekennzeichnet, dass** die Gewichtsscheibe (12) eine zentrale Ausnehmung (42) zur formschlüssigen Aufnahme der Halterung (16), insbesondere eines von dieser umfassten hohlzylindrischen Grundkörpers (28), aufweist.

15. Radzusatzgewicht nach Anspruch 14, **dadurch gekennzeichnet, dass** an der Halterung (16) entlang des hohlzylindrischen Grundkörpers (28) axial verlaufende Gleitrippen (38) ausgebildet sind.

16. Radzusatzgewicht nach wenigstens einem der vorhergehenden Ansprüche 1 bis 15, **dadurch gekennzeichnet, dass** die Gewichtsscheibe (12) ihrerseits ein Kupplungselement (22) zur Anbringung einer weiteren Gewichtsscheibe (12) aufweist.

17. Radzusatzgewicht nach wenigstens einem der vorhergehenden Ansprüche 1 bis 16, **dadurch gekennzeichnet, dass** an der Gewichtsscheibe (12) Ausnehmungen (70) zur Aufnahme einer Ladergabel (68) oder eines Seilzugs ausgebildet sind.

## Claims

1. Additional wheel weight for an agricultural utility vehicle, having a weight plate (12) and a mount (16), attachable to a wheel rim (14), for fastening the weight plate (12), wherein the weight plate (12) comprises a closure mechanism (18) that is actuable manually and/or by external force, said closure mechanism (18) having an axially extending guide opening (20) for receiving a coupling element (22) assigned to the mount (16), and a releasable locking element (26) for locking the coupling element (22) within the guide opening (20).

2. Additional wheel weight according to Claim 1, **characterized in that** the locking element (26), for locking the coupling element (22) in a locking position, has a blocking contour (54) that projects into the guide opening (20).

3. Additional wheel weight according to Claim 2, **characterized in that** the blocking contour (54) is formed on a displaceable locking bolt (50) or on a pawl, wherein the locking bolt (50) or the pawl is urged into the locking position under the action of a restoring spring (58).

4. Additional wheel weight according to Claim 3, **characterized in that** the locking bolt (50) or the pawl can be moved into an unlocking position, releasing the coupling element (22), counter to the action of the restoring spring (58) by means of an actuating lever (64).

5. Additional wheel weight according to Claim 3 or 4, **characterized in that** the locking bolt (50) or the pawl, together with the restoring spring (58), form a latch, releasably by means of the actuating lever (64), for automatically locking the coupling element (22).

6. Additional wheel weight according to Claim 2, **characterized in that** the blocking contour (54) is formed on a pivotably mounted actuating lever (72).

7. Additional wheel weight according to Claim 6, **characterized in that** the coupling element (22) is in the form of a coupling ball (24), wherein the blocking contour (54) has a spherical profile that is oriented about a pivot axis (74) aligned with the centre of the coupling ball (24) located in the guide opening (20).

8. Additional wheel weight according to Claim 7, **characterized in that** the spherical blocking contour (54) extends eccentrically with respect to the pivot axis (74) of the actuating lever (72) such that the coupling ball (24) is braced in the locking position within the guide opening (20).

9. Additional wheel weight according to Claim 4 or 6, **characterized in that** a securing element (76) for releasably fixing the actuating lever (64; 72) in the locking position is provided.

10. Additional wheel weight according to Claim 4 or 6, **characterized in that** the actuating lever (64; 72), in the locking position, is received in a substantially flush manner in a cutout (66) that the weight plate (12) comprises.

11. Additional wheel weight according to at least one of Claims 1 to 10, **characterized in that** a tensioning element (84) for establishing a force fit between the mount (16) and the weight plate (12) is provided.

12. Additional wheel weight according to at least one of Claims 1 to 11, **characterized in that** the weight plate (12) has a plurality of closure mechanisms (18) in radially opposite positions.

13. Additional wheel weight according to at least one of Claims 1 to 12, **characterized in that** the mount (12) has a hollow-cylindrical main body (28) and an encircling fastening flange (30) for attaching to a wheel rim (14).

14. Additional wheel weight according to at least one of Claims 1 to 13, **characterized in that** the weight plate (12) has a central cutout (42) for receiving the mount (16), in particular a hollow-cylindrical main body (28) that the latter comprises, in a form-fitting manner.

15. Additional wheel weight according to Claim 14, **characterized in that** sliding ribs (38) that extend axially along the hollow-cylindrical main body (28) are formed on the mount (16).

16. Additional wheel weight according to at least one of the preceding Claims 1 to 15, **characterized in that** the weight plate (12) has for its part a coupling element (22) for attaching a further weight plate (12).

17. Additional wheel weight according to at least one of the preceding Claims 1 to 16, **characterized in that** cutouts (70) for receiving a loader fork (68) or a cable pull are formed on the weight plate (12).

## Revendications

1. Masse de lestage de roue pour un véhicule utilitaire agricole, comprenant un disque de lestage (12) et un support (16) pouvant être attaché à une jante de roue (14) pour fixer le disque de lestage (12), le disque de lestage (12) comprenant un mécanisme de fermeture (18) pouvant être actionné manuellement et/ou par une force extérieure et qui présente une ouverture de guidage (20) s'étendant axialement, destinée à recevoir un élément d'accouplement (22) associé au support (16), ainsi qu'un élément de verrouillage (26) amovible pour bloquer l'élément d'accouplement (22) à l'intérieur de l'ouverture de guidage (20).

2. Masse de lestage de roue selon la revendication 1, **caractérisée en ce que** l'élément de verrouillage (26) présente un contour d'arrêt (54) faisant saillie dans l'ouverture de guidage (20) pour bloquer l'élément d'accouplement (22) dans une position de verrouillage.

3. Masse de lestage de roue selon la revendication 2, **caractérisée en ce que** le contour d'arrêt (54) est réalisé sur un boulon de verrouillage mobile (50) ou un cliquet d'arrêt, le boulon de verrouillage (50) ou le cliquet d'arrêt étant forcé dans la position de verrouillage sous l'effet d'un ressort de rappel (58).

4. Masse de lestage de roue selon la revendication 3, **caractérisée en ce que** le boulon de verrouillage (50) ou le cliquet d'arrêt peut être amené dans une position de déverrouillage libérant l'élément d'accouplement (22), à l'encontre de l'effet du ressort de rappel (58), au moyen d'un levier d'actionnement (64).

5. Masse de lestage de roue selon la revendication 3 ou 4, **caractérisée en ce que** le boulon de verrouillage (50) ou le cliquet d'arrêt constituent en conjonction avec le ressort de rappel (58) une fermeture à encliquetage amovible au moyen du levier d'actionnement (64) pour le blocage automatique de l'élément d'accouplement (22).

6. Masse de lestage de roue selon la revendication 2, **caractérisée en ce que** le contour d'arrêt (54) est formé sur un levier d'actionnement (72) monté pivotant.

7. Masse de lestage de roue selon la revendication 6, **caractérisée en ce que** l'élément d'accouplement (22) est réalisé sous la forme d'une rotule d'accouplement (24), le contour d'arrêt (54) présentant une allure sphérique qui est orientée autour d'un axe de pivotement (74) en alignement avec le centre de la rotule d'accouplement (24) se trouvant dans l'ouverture de guidage (20).

8. Masse de lestage de roue selon la revendication 7, **caractérisée en ce que** le contour d'arrêt (54) sphérique s'étend de manière excentrique par rapport à l'axe de pivotement (74) du levier d'actionnement (72) de telle sorte que la rotule d'accouplement (24) dans la position de verrouillage est serrée à l'intérieur de l'ouverture de guidage (20).

9. Masse de lestage de roue selon la revendication 4 ou 6, **caractérisée en ce qu'**un élément de fixation (76) destiné à la fixation amovible du levier d'actionnement (64 ; 72) existe dans la position de verrouillage.

10. Masse de lestage de roue selon la revendication 4 ou 6, **caractérisée en ce que** dans la position de verrouillage, le levier d'actionnement (64 ; 72) est reçu de manière substantiellement alignée en surface dans un évidement (66) entouré par le disque de lestage (12).

11. Masse de lestage de roue selon au moins l'une des revendications 1 à 10, **caractérisée en ce qu'**un élément de serrage (84) est prévu pour réaliser un assemblage par adhérence entre le support (16) et le disque de lestage (12).

12. Masse de lestage de roue selon au moins l'une des revendications 1 à 11, **caractérisée en ce que** le disque de lestage (12) présente plusieurs mécanismes de fermeture (18) dans des positions radialement opposées.

13. Masse de lestage de roue selon au moins l'une des revendications 1 à 12, **caractérisée en ce que** le support (12) présente un corps de base cylindrique creux (28) ainsi qu'une bride de fixation périphérique (30) à attacher à une jante de roue (14).

14. Masse de lestage de roue selon au moins l'une des revendications 1 à 13, **caractérisée en ce que** le disque de lestage (12) présente un évidement central (42) pour recevoir par complémentarité de forme le support (16), en particulier un corps de base cylindrique creux (28) entouré par celui-ci.

15. Masse de lestage de roue selon la revendication 14, **caractérisée en ce que** des nervures de glissement (38) s'étendant axialement le long du corps de base cylindrique creux (38) sont réalisées sur le support (16).

16. Masse de lestage de roue selon au moins l'une des revendications précédentes 1 à 15, **caractérisée en ce que** le disque de lestage (12) présente à son tour un élément d'accouplement (22) pour attacher un disque de lestage (12) supplémentaire.

17. Masse de lestage de roue selon au moins l'une des revendications précédentes 1 à 16, **caractérisée en ce que** des évidements (70) pour recevoir une fourche de chargeuse (68) ou un câble Bowden sont réalisés sur le disque de lestage (12).
